# EUROPEAN PATENT SPECIFICATION

(11) **EP 0 281 999 B1**
(45) Date of publication and mention of the grant of the patent: **02.06.1993**
(21) Application number: 88103609.9
(22) Date of filing: 08.03.1988
(51) Int. Cl.: G06F 9/44, G06F 12/06

(54) **Data processing system with pluggable option card**
Datenverarbeitungssystem mit einer steckbaren optionellen Karte
Dispositif de traitement de données avec une carte optionnelle enfichable

(30) Priority: 13.03.1987 US 21391
(43) Date of publication of application: 14.09.1988
(73) Proprietor: International Business Machines Corporation, Armonk, N.Y. 10504 (US)
(72) Inventor: Heath, Chester Asbury, Boca Raton Florida 33431 (US); Langgood, John Kennedy, Boca Raton Florida 33431 (US); Valli, Ronald Eugene, Pittsburgh, PA 15235 (US)
(74) Representative: Burt, Roger James, Dr.

(56) References cited:
- EP-A- 0 136 178
- EP-A- 0 171 073
- EP-A- 0 182 044
- NEW ELECTRONICS, vol. 19, no. 14, 8th July 1986, pages 27-28, London, GB; M. BUDZINSKI: "Geographic adressing with multibus II"
- EDN MAGAZINE, vol. 26, no. 3, February 1981, page 88, Boston, US; N.D. MACKINTOSH: "Interrogation tells mumP which boards are present"

## Description

The present invention relates to digital data processing system using pluggable option cards, and if, particular to configuration of such systems for different option cards.

Many microprocessor systems are arranged to accept option cards such as, for example, communications adaptions, expansion memory, and graphics adapters. Most of these systems include manually operable switches which are set in accordance with the option cards and used so as to configure the systems for the option cards. Many users find the switch setting procedures too complex for them to follow unaided.

Users of smaller computer systems typically do not have sophisticated programming skills, and user-transparent programmable parameter switches have been suggested to simplify configuration of the systems to the user's needs. However, the routines that are required to so configure such systems are complex, error prone, and time consuming.

In European Patent Application EP-A-0 136178 there is disclosed a method for automatically reconfiguring the memory address space of a computer by interrogation of information stored on memory boards relating to available memory thereon and subsequent assignment to the board of address ranges in the computers' address space.

Another technique for simplifying configuration of a microprocessor system is described in EDN Magazine, Vol 26, No 3, February 1981, on page 88. Here each option card plugged into one of several card positions in the system stores a unique identifier pattern indicating its type. The processor carries out an attendance check on power on or at regular intervals to determine which cards are plugged in and the positions they occupy. However this still leaves the user with the task of interpreting the results of such a check and making adjustments as required.

It is an object of the present invention to substantially reduce the time delay experienced by a user before he can do productive work on the system upon re-powering or resetting of the system after a power-down, so long as no cards are changed in, added to, or removed from the slots.

According to the invention there is provided a digital data processing system including a plurality of input/output sockets (2-0 to 2-7) for accepting up to a like plurality of input/output option cards (5-0 to 5-7) each storing identifier data relating to the option provided thereby, characterised by a non-volatile memory (10) for storing, for each socket, identifier data relating to a card occupying such socket together with operational data for controlling execution of the associated option, means (14) for applying an enabling signal to said sockets at power on to obtain identifier data from each card occupying a socket, means (8) for comparing the identifier data so obtained with identifier data retained at power down in said non-volatile memory for cards occupying corresponding sockets to determine whether the retained operational data is valid for cards currently occupying the sockets and gating means (45) responsive to a successful comparison to gate valid operational data for storage in said cards to control execution of the options provided thereby.

There is further provided, a method of automatically setting operational data for operation of option cards pluggable into input/output sockets in a microcompter system, each option card storing identifier data identifying the option provided thereby,
characterised by the steps of:
at initial power-up of the system, generating option card parameters relating to cards plugged into the sockets, and storing the generated parameters in a non-volatile memory;
at subsequent power-up, determining that the stored parameters remain valid with respect to option cards plugged into the sockets;
transferring the valid parameters from the memory to the respective option cards;
and using the parameters so transferred as control data for running the options provided by such option cards.

In an embodiment of the invention to be described below, each option card type is provided a unique ID, which value is hardwired on each card. A register is also provided on the card to store parameter data such as an address factor (to programmably change the I/O address space of the card where required), priority, status, and other system information providing for the efficient transfer of data between the system processor and the card, and between cards.

When two or more of the same card type are used in the system, parameter data may be used to permit use of the cards at different priority levels or to render redundant cards inactive.

One portion of main memory is provided with battery backup to power that portion when system power fails or is turned off. Positions in this non-volatile portion of memory are provided (one for each I/O slot) to store the ID values of the cards inserted in the respective slots together with the respective card parameter data.

When the system is first configured and initialised, a complex routine is executed to create and/or fetch all of the parameter data required for the cards attached to the system, to resolve system resource conflicts and to store the data into the appropriate card registers and the memory slot positions.

However, if after a power-down, no change is made in the cards attached to the slots or in the slot positions of the cards, a simplified setup routine determines that no change has been made by comparing each card ID with the ID value stored in the respective slot position. Then the routine transfers the parameter data from the memory slot positions to the respective card registers; and the system is ready for normal operation.

After the system is configured and initialised, a feedback line is provided to signal the use of the select mechanism during normal operation. Routines are invoked to check the response of each card to given select resources to detect duplicate use of a select resource.
The embodiment of the invention will now be described, by way of example with accompanying drawings, in which:
Figure 1 is a fragmentary block diagram of the improved system;
Figure 2 illustrates the bus structure in the Figure 1 system;
Figure 3 shows certain of the logic utilised by setup routines operating in the Figure 1 system;
Figure 4 shows timings for certain of the logic of Figure 3;
Figure 5 shows logic utilised by test routines to check the proper selection of an I/O card; and
Figures 6 and 7 are flowcharts which illustrate briefly the setup routines used in the present system.

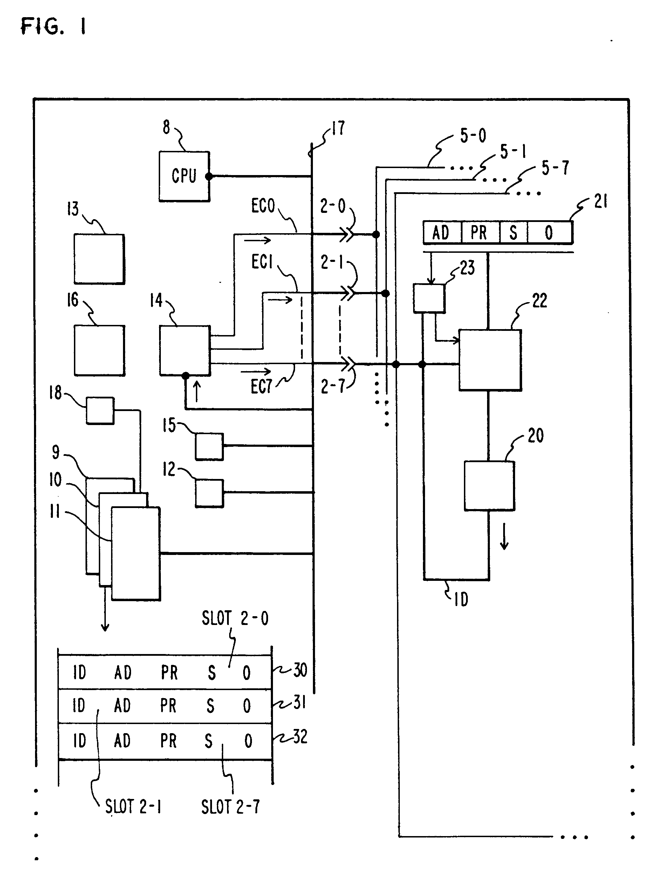

Figure 1 illustrates a preferred embodiment of the present invention in the form of an integrated circuit desktop type computer system featuring user-transparent establishment of addressing and other variable system resource parameters for attached peripheral options. Thus the user is not burdened with having to set dip switches, follow complex setup procedures, etc. System resource conflicts are reduced or eliminated by reassigning of parameters. Other parameters include priority levels and a state bit which allows for coexistence of two identical option attachments.

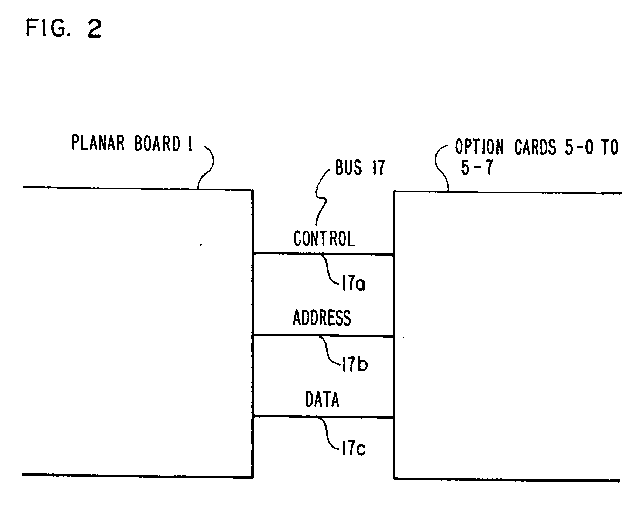

System board 1 contains plural sockets or slots 2-0 to 2-7 into which I/O option cards 5-0 to 5-7 may be interchangeably plugged. These cards control various types of peripheral devices (disk drives, printers, etc.) and add-on memory which are either integrally contained on respective cards or attached thereto via external connectors, not shown. Board 1 also contains elements of the central processing system, including a central processor unit (CPU) 8, random access memory (RAM) main memory modules 9, 10, 11, direct memory access (DMA) controls 12, timing controls 13, slot address decoder 14, whose function is described below, other logical elements not relevant to the present discussion indicated collectively at 15, power supply 16, and bus 17 which links the central processing elements with each other and with attached peripherals. Darkened portions of the bus represent plural address lines 17b, data lines 17c, and control lines 17a (Figure 2).

A feature hereof is that slots 2-0 to 2-7 can be addressed by "slot address" signals on the address lines of bus 17 during setup routines, and cards residing in the slots can be separately addressed by "I/O address" signals on the address lines during normal program execution; where the slot addresses and I/O addresses are distinctly different values associated respectively with physical locations of the sockets and with the types of devices currently attached. Many different types of devices are each potentially attachable to any one of the few sockets of the system.

One of the memory modules, module 10 in the illustration, is non-volatile, and stores information relative to each of the slots 2-0 to 2-7 and its associated card when the system is powered down. This module for example, may consist of an array of capacitive storage circuits, i.e., known complimentary metal-oxide silicon (CMOS) type semi-conductor circuits, configured to operate under system power while the system is powered up and under battery power 18 in the absence of system power. Within this module, a separately addressable space is allocated to each slot, for storing certain information relative to the slot. As shown, this information includes an identity value ID, an addressing factor AD, a priority value PR, a state bit S, and other information O.

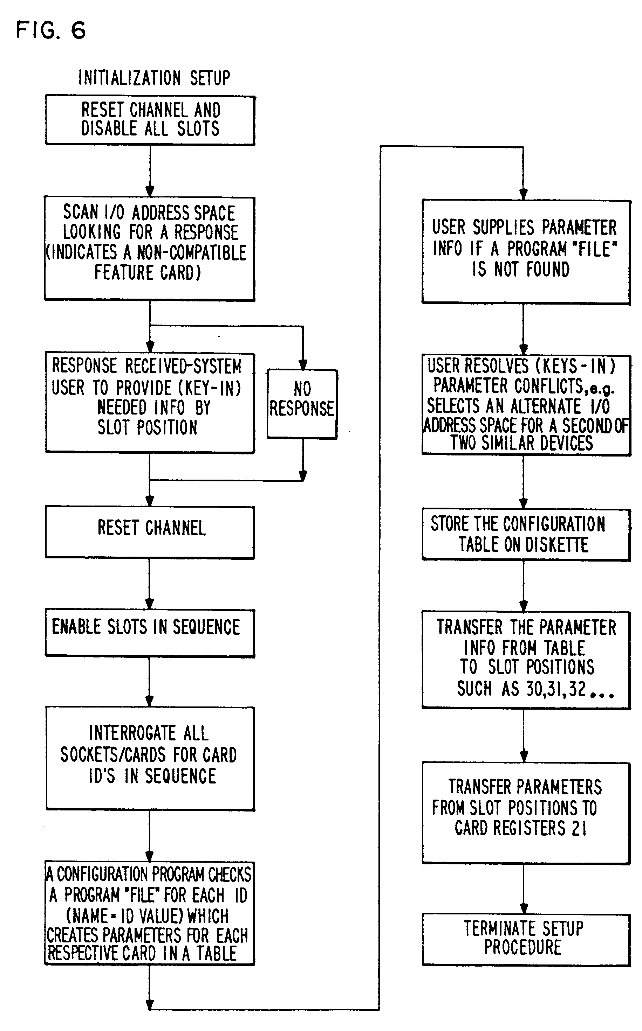

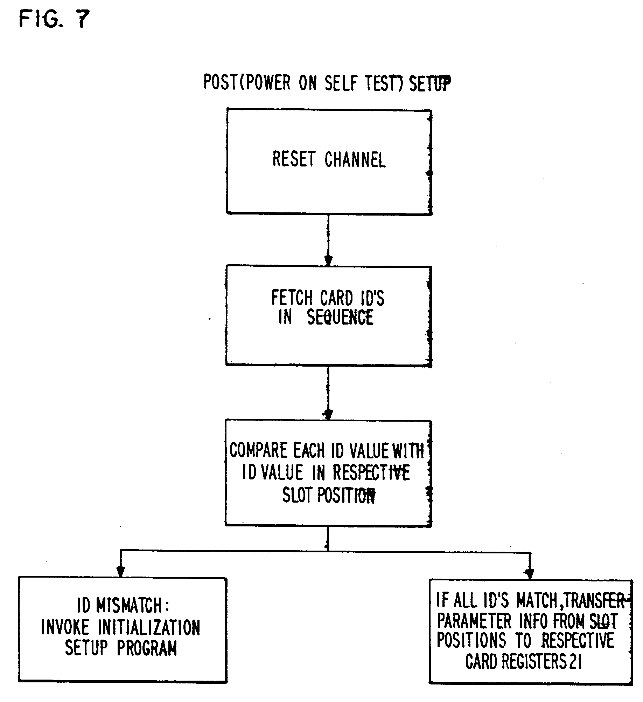

A feature to be described is the use of this information in the non-volatile memory to speed up initialisation (Figure 7) of the system when the slot configuration has not changed since the last power-down, and thereby reduce the time the user has to wait to begin useful applications after operating the system power-on switch, not shown, or after system or channel reset. This difference in complexity and number of steps required is illustrated by Figures 6 (initialization) and 7 (POST).

Details of card 5-7 are indicated as representative of the relevant logical organizations of all cards to the extent required for describing the present system. Driver circuits 20 are pre-wired at manufacture, and under conditions described below transmit a set of identity signals ID which uniquely identify that card type and its respective peripheral device.

Register 21 stores parameter information for controlling communications between the card and the system, including the address factor AD, the priority value PR, the state bit S, and other information O described with respect to module 10. This information is set by the central system during power-up initialization (Figure 6.) A feature of the system is that, if slot conditions have not changed since the last power-down of the system, the information is simply transferred to register 21 from the nonvolatile memory 10 in a relatively fast operation (Figure 7), whereas if slot conditions have changed the system is required to perform a lengthy program process (Figure 6) to retrieve and/or develop some or all of the information and then transfer it to both memory 10 and the card register 21.

Control logic 22 and decode logic 23 control response of the card 5-7 to I/O addresses appearing on bus 17. When power is applied to the system, the cards are addressable initially only through their sockets, and a portion of the address bus. But after the power-up process, the value AD in register 21 controls decoder 23 to detect a default or alternate I/O address associated uniquely to the card type and unrelated to the socket location. Upon such detection, the priority value PR and state bit S in conjunction with control logic 22 determine when data may be exchanged between the card and the bus 17. One manner in which an AD value, the decoder 23 and logic 22 detect an I/O address is shown and described in Interfacing to the IBM Personal Computer by L. Eggebrecht published 1983 at pages 130, 131.

In operation, during its power-up sequence the central system individually addresses the option sockets, by sending respective "slot address" signals on the bus which are uniquely detected by decoder 14 and result in separate activation of setup (or enable card) lines EC0-EC7 extending to respective sockets 2-0 to 2-7 and through the sockets to attached cards 5-0 to 5-7. Upon activation of one such line, if the respective socket is vacant the hexadecimal value of FFFF is returned to the system which terminates further operation relative to that socket. However, if the socket contains a card, the activated line in conjunction with additional address signals on the bus 17 condition logic 22 on the respective card to cause drivers 20 to transmit the ID signals mentioned above which identify the respective card and device type. The system CPU compares the returned ID signals with the ID value stored in the location in memory 10 allocated to the respective slot, and sets an indication denoting whether the compared values are the same or different. This indication serves effectively as a branch condition for subsequent program processes which determine the action to be taken relative to the respective slot.

If the indication just mentioned represents a matching comparison, and conditions of all other slots have not changed, a subsequent program process will simply transfer the value of AD, PR, S, and O, which are currently stored in the associated location of memory 10 to the respective card for storage in its register 21. If the indication represents a non-matching comparison, and if the transmitted ID indicates that the respective slot contains a card, the processor 8 uses the transmitted ID and information gleaned from the other slots to retrieve and/or develop new AD, PR, S, and O values for the respective card using files describing card resource requirements and alternatives. After all card values are established, the values for each card are transferred in sequence first to the respective slot location in memory 10 and subsequently to the respective card register 21.

Mismatching comparisons occur when the state of the interrogated socket has been altered. The ID value stored in memory 10 relative to a socket which was vacant at last power-down is FFFF, and the ID value stored relative to a previously occupied socket is that of the card last occupying that slot. Thus, if a card is installed into a previously vacant slot or substituted for a card having a different ID, a mismatching comparison will occur causing the system to retrieve and/or develop new AD, PR, S, and O values for the responding card.

As noted above, the system cannot deal with mismatching indications until the states of all sockets have been ascertained. This is because the priority level, and in certain instances the address and state values, assigned to any card are relative to the cards in other slots. The address and state values are relative when two cards with the same identity ID are currently installed, either to provide redundant backup for device failure or to provide additional device capacity. In the latter instances, the state value can be used to place a backup device in an inactive state during normal system operation or the priority values can be used to allow both devices to operate fully but at different priority levels.

In the preferred embodiment, system information is stored in the eight slot positions (only three - 30, 31, 32 - are shown) of module 10 to accommodate up to eight feature cards 5-0 to 5-7. Each slot position is four bytes wide, twenty-eight bytes for seven feature cards. The card ID resides in the first two bytes and the switch (parameter) settings in the last two bytes. The corresponding ID and parameter data on each card resides in drivers 20 and register 21, respectively.

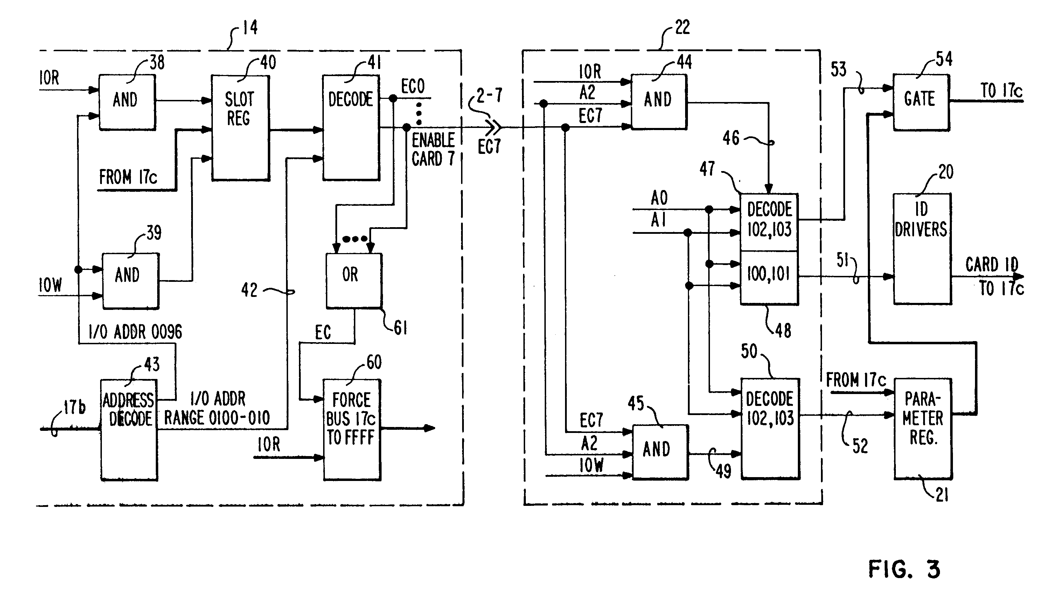

Figure 3 shows schematically certain of the logic on the board 1 and feature card 5-7 used during setup routines to read out a card ID and store parameters in the register 21. With respect to Figure 3, the hexadecimal I/O address values assigned to certain of the components on each of the feature cards is as follows:
096 - socket select value (one byte)
100, 101 - ID drivers 20 (two bytes)
102, 103 - parameter register 21 (two bytes)
These are "dummy" addresses since they are used by the processor 8 to access I/O cards and components via the slots during setup operations. The address 096 selects the logic (gates 38, 39) of slot address decoder 14 for storing the card select value into slot register 40 and also for reading out the value, i.e., during diagnosis. Address lines A0 and A1 of Figure 3 form the lower address values 00, 01, 02, and 03 for selecting the components 20 and 21, while a logical 1 signal on address line A2 provides the most significant digit value of 1. A0, A1, and A2 are coupled to appropriate bit lines of address bus 17b, Figure 2.

Figure 3 also shows in more detail certain of the logic of the slot address decoder 14 and of the control logic 22 of card 7 which are used in the setup routines of Figures 6 and 7. It will be assumed for simplicity of discussion, that addressing of two bytes at a time, i.e., one cycle, is available and that two byte data transfers occurs on busses. Hence, decoding address 101 gates both bytes for addresses 101 and 100.

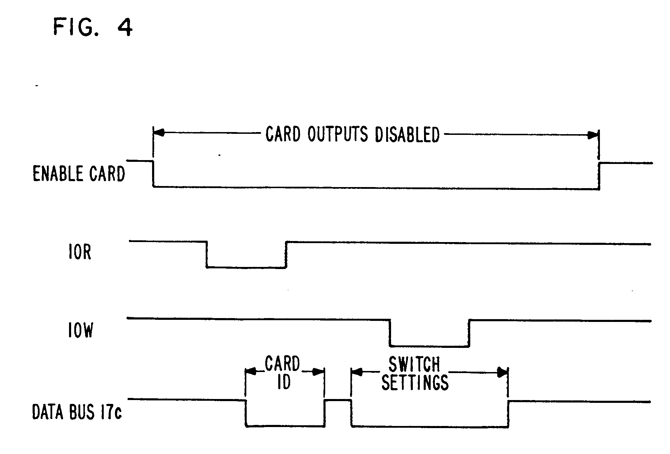

Slot register 40 is program controlled to store a three bit value (000-111) corresponding to a slot (2-0 to 2-7) to be accessed. A decode circuit 41 changes this three bit binary value to a one in eight line output but only when it is gated by a signal on input line 42. Each output line, such as EC7, is connected via the respective socket to the card held in the socket. When a decode circuit 43 decodes an address in the range 0100 - 0103 during a setup routine, it produces an output on line 42 to gate the value in 40 to cause an output (see Figure 4) on a card setup line such EC7, one of the control lines 17a of bus 17.

This output on EC7 is applied to AND gates 44 and 45. The address line A2 is coupled to gates 44 and 45. An I/O read line IOR and an I/O write line IOW (decoded from control lines 17a) are coupled respectively to gates 44 and 45. An output 46 from gate 44 is coupled to a pair of decoder circuits 47 and 48. An output 49 from gate 45 is coupled to a decode circuit 50. An output 51 from decode 48 is coupled to the ID driver circuit 20 and the output 52 from decode 50 is coupled to the parameter register 21.

During the post setup routine of Figure 7, when an ID is being fetched from card 7, the processor 8 forces A2 negative (logical 1) and A1, A0 to logic 01 (address 101). EC7 is negative (Figure 4). When IOR goes negative, the gate 44 produces an output at 46 to produce an output at 51 which gates the card ID value in 20 to data bus 17c. Processor 8 compares this ID with the ID in the respective slot position in memory module 10. If the IDs compare, processor 8 transfers the parameter values in the slot position 32 (Figure 1) to data bus 17c and forces A2, A1, A0 to logic 111 (address 103). Shortly thereafter, processor 8 issues an IOW to cause gate 45 to produce an output on 49. This gates an output from 50 to register 21 via line 52 to gate the parameter values on bus 17c into register 21. The output 53 of decode 47 is used during diagnostic routines to gate the output of parameter register 21 to bus 17c via gate 54.

As discussed above with respect to a setup routine, an ID of hexadecimal value FFFF is returned during an ID fetch operation when the addressed socket is empty. One method of achieving this result is shown in Figure 3. A pre-wired circuit 60 is gated to force bus 17 to all "1's" during the IOR cycle by a negative going signal on any one of the enable card lines EC1 to EC7 via OR circuit 61 and the negative going signal on IOR. If a card is in the socket which has been addressed, its ID is gated to bus 17c at the same time and all logical 0s in the ID override the logical 1s from 60 to correctly reproduce the ID on bus 17c.

The logic of Figure 3 is used in a similar manner during the initialisation setup and the POST setup routines of Figures 6 and 7.

When two identical cards (same ID) are connected to two of the I/O slots and it is desired to render both active, the first card is assigned the standard I/O default address at one priority level and the other card is assigned an alternate I/O address at a different priority level.

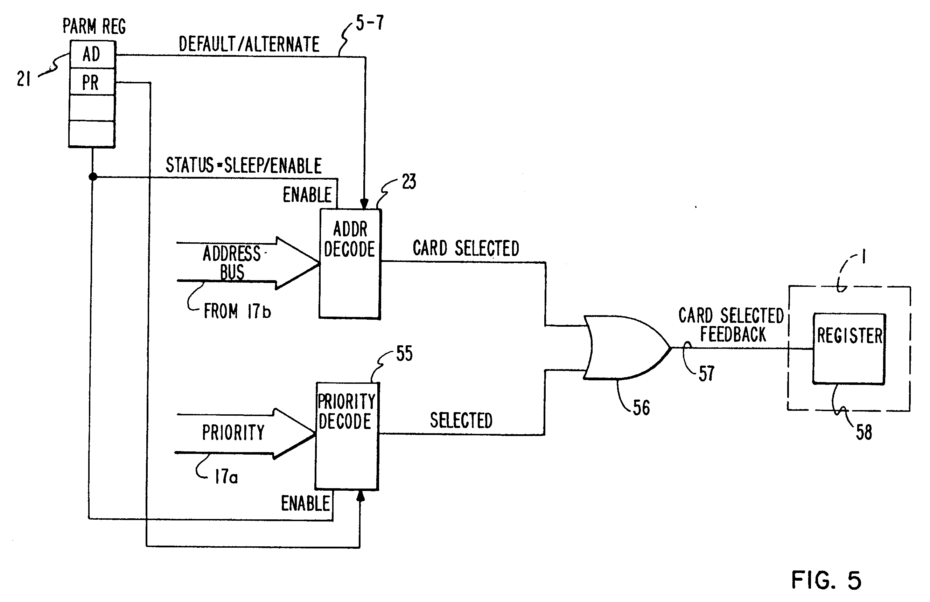

The logic of Figure 5 is then utilised during a diagnostic routine to ascertain whether each card properly responds to its respective I/O address. The address decode logic 23 decodes the address on bus 17b if it corresponds to the alternate address when the appropriate alternate address factor AD is stored in parameter register 21 and the least significant bit is on (the card is active). Similarly, a priority decode circuit 55 produces an output if the priority value on bus 17a is equal to PR in register 21 and the card active bit is on. If outputs are produced by logic 23 and 55, an AND gate 56 produces a feedback signal on line 57 to set one bit in a register 58 on the board 1. The CPU8 under program control will read register 58 to determine that one and only one card properly responded to the I/O alternate address and reset register 58. Similar circuits on the other identical card will respond to the default I/O address and the appropriate priority level to set another bit in register 58 for diagnostic purposes.

## Claims

1. A digital data processing system including a plurality of input/output sockets (2-0 to 2-7) for accepting up to a like plurality of input/output option cards (5-0 to 5-7) each storing identifier data relating to the option provided thereby, characterised by a non-volatile memory (10) for storing, for each socket, identifier data relating to a card occupying such socket together with operational data for controlling execution of the associated option, means (14) for applying an enabling signal to said sockets at power on to obtain identifier data from each card occupying a socket, means (8) for comparing the identifier data so obtained with identifier data retained at power down in said non-volatile memory for cards occupying corresponding sockets to determine whether the retained operational data is valid for cards currently occupying the sockets and gating means (45) responsive to a successful comparison to gate valid operational data for storage in said cards to control execution of the options provided thereby.

2. A system as claimed in Claim 1 including one or more option cards installed in said sockets, each card including circuit means (20) for generating said identifier data in response to said enabling signal and register means (21) for storing said valid operational data from said memory.

3. A system as claimed in Claim 1 or Claim 2 including means (60) for generating fixed identifier data in response to enable signals applied to empty sockets.

4. A system as claimed in Claim 3 including means (8 and Figure 6) for initially setting up operational data in said memory in response to identifier data received from sequentially enabled cards in said sockets and said fixed identifier data corresponding to empty sockets.

5. A system as claimed in Claim 4 including means (8 and Figure 7) for transferring corresponding operational data from said memory to the register means in each card within a socket in response to the detection of equality between the identifier data from each card in a socket together with said fixed identifier data corresponding to any empty sockets and said identifier data in said memory, or, in response to detection of inequality therebetween, to update said operational data in said memory in response to the identifier data received from the cards and said fixed identifier data corresponding to empty sockets.

6. A method of automatically setting operational data for operation of option cards pluggable into input/output sockets in a microcomputer system, each option card storing identifier data identifying the option provided thereby,
characterised by the steps of:
at initial power-up of the system, generating option card parameters relating to cards plugged into the sockets, and storing the generated parameters in a non-volatile memory;
at subsequent power-up, determining that the stored parameters remain valid with respect to option cards plugged into the sockets;
transferring the valid parameters from the memory to the respective option cards;
and using the parameters so transferred as control data for running the options provided by such option cards.

7. A method as claimed in Claim 6, in which said parameters include identity data, and each option card includes means for generating identity data, and the step of determining that the stored parameters remain valid comprises comparing the identity data from each option card with identity data within the parameters stored in a memory location corresponding to the socket into which the card is plugged.

8. A method according to Claim 6 or Claim 7 in which said parameters include a unique parameter set representing the absence of an option card in a socket, and the step of determining that the stored parameters remain valid further includes the step of generating said unique parameter set on detection of the absence of an option card in a socket and determining, by comparison, whether the stored parameter set corresponding to that socket equals the unique parameter set, thereby determining whether an option card has been inserted during power-down of the system.

## Patentansprüche

1. Ein digitales Datenverarbeitungssystem mit einer Vielzahl von Ein-/Ausgabesteckbuchsen (2-0 bis 2-7) zur Aufnahme einer entsprechenden Vielzahl optioneller Ein/Ausgabekarten (5-0 bis 5-7), von denen jede Identifikationssdaten speichert, die sich auf die dadurch zur Verfügung gestellte Option beziehen, gekennzeichnet durch einen nicht flüchtigen Speicher (10), der dazu dient, für jede Steckbuchse Identifikationsdaten zu speichern, welche sich auf eine Karte beziehen, die eine solche Steckbuchse besetzt, sowie Betriebsdaten zur Steuerung der Ausführung der zugeordneten Option, ein Mittel (14) zur Sendung eines Freigabesignals an die genannten Steckbuchsen beim Einschalten, um Identifikationsdaten von jeder eine Steckbuchse besetzenden Karte zu erhalten, ein Mittel (8) zum Vergleichen der so gewonnenen Identifikationsdaten mit Identifikationsdaten, die beim Abschalten in dem genannten nicht flüchtigen Speicher festgehalten wurden, für Karten, die die betreffenden Steckbuchsen besetzen, um festzustellen, ob die festgehaltenen Betriebsdaten für aktuell in den Steckbuchsen befindliche Karten gültig sind, und Gatterschaltmittel (45), welche auf einen erfolgreichen Vergleich ansprechen und gültige Betriebsdaten zur Speicherung in die genannten Karten gattern, um die Ausführung der dadurch zur Verfügung gestellten Optionen zu steuern.

2. Ein System gemäß Anspruch 1, das eine oder mehre optionelle Karten enthält, die in den genannten Steckbuchsen installiert sind, wobei jede Karte Schaltungsmittel (20) zur Erzeugung der genannten Identifikationsdaten als Antwort auf das genannte Freigabesignal enthält, und Registermittel (21) zum Speichern der genannten gültigen Betriebsdaten vom genannten Speicher.

3. Ein System gemäß Anspruch 1 oder Anspruch 2, welches ein Mittel (60) zur Erzeugung fixierter Identifikationsdaten in Antwort auf an leere Steckbuchsen geleitete Freigabesignale enthält.

4. Ein System gemäß Anspruch 3, mit Mitteln (8 und Figur 6) für die erste Einstellung von Betriebsdaten im genannten Speicher in Antwort auf Identifikationsdaten, die von sequentiell freigegebenen Karten in den genannten Steckbuchsen empfangen wurden, und diese fixierten Identifikationsdaten leeren Steckbuchsen entsprechen.

5. Ein System gemäß Anspruch 4, mit Mitteln (8 und Figur 7) für die Übertragung entsprechender Betriebsdaten vom genannten Speicher zum Registermittel in jeder in einer Steckbuchse befindlichen Karte, in Antwort auf die Erkennung einer Gleichheit zwischen den Identifikationsdaten von jeder Karte in einer Steckbuchse, zusammen mit den genannten fixen Identifikationsdaten für jede leere Steckbuchse, und den genannten Identifikationsdaten im genannten Speicher, oder, in Antwort auf die Erkennung einer Ungleichheit zwischen diesen, zur Aktualisierung der genannten Betriebsdaten im genannten Speicher in Antwort auf die von den Karten empfangenen Identifikationsdaten, und diese genannten fixierten Identifikationsdaten leeren Steckbuchsen entsprechen.

6. Eine Methode für die automatische Einstellung von Betriebsdaten für den Betrieb von optionellen Karten, die in die Ein-/Ausgabesteckbuchsen eines Mikrorechnersystems eingesteckt werden können, wobei jede optionelle Karte Identifikationsdaten speichert, welche die dadurch zur Verfügung gestellte Option identifizieren,
gekennzeichnet durch folgende Schritte:
beim ersten Einschalten des Systems Erzeugung von Parametern für die optionellen Karten für die in die Steckbuchsen eingesteckten Karten und Speichern der erzeugten Parameter in einem nicht flüchtigen Speicher;
beim nachfolgenden Einschalten Feststellung, daß die gespeicherten Parameter in bezug auf die in die Steckbuchsen eingesteckten optionellen Karten gültig bleiben;
Übertragung der gültigen Parameter vom Speicher zu den jeweiligen optionellen Karten;
und Verwendung der so übertragenen Parameter als Steuerdaten für den Ablauf der durch solche optionellen Karten zur Verfügung gestellten Optionen.

7. Eine Methode gemäß Anspruch 6, in welcher die genannten Parameter Identitätsdaten enthalten, und jede optionelle Karte Mittel zur Erzeugung von Identitätsdaten enthält, und der Schritt zur Feststellung, daß die gespeicherten Parameter gültig bleiben, einen Vergleich der Identitätsdaten von jeder optionellen Karte mit den Identitätsdaten innerhalb der Parameter enthält, die an einem Speicherplatz entsprechend der Steckbuchse, in die die Karte eingesteckt wurde, gespeichert sind.

8. Eine Methode gemäß Anspruch 6 oder Anspruch 7, in der die genannten Parameter einen eindeutigen Parametersatz enthalten, welcher das Nichtvorhandensein einer optionellen Karte in einer Steckbuchse darstellt, und der Schritt zur Feststellung, daß die gespeicherten Parameter gültig bleiben, desweiteren einen Schritt enthält für die Erzeugung des genannten eindeutigen Parametersatzes bei Erkennung des Nichtvorhandenseins einer optionellen Karte in einer Steckbuchse und, durch Vergleich, Bestimmung, ob der gespeicherte Parametersatz, der dieser Steckbuchse entspricht, dem eindeutigen Parametersatz entspricht, wobei hierdurch festgestellt wird, ob eine optionelle Karte beim Abschalten des Systems eingeführt wurde.

## Revendications

1. Système de traitement de données numériques comprenant un ensemble de socles d'entrée/sortie (2-0 à 2-7) pour recevoir jusqu'à un nombre équivalent audit ensemble, de cartes d'options (5-0 à 5-7) chacune emmagasinant des données d'identification de l'option fournie, caractérisé par une mémoire non volatile (10) pour emmagasiner pour chaque socle, des données d'identification relatives à la carte occupant le socle en même temps que des données opérationnelles de contrôle de l'exécution de l'option correspondante, des moyens (14) pour appliquer un signal de validation audit socle à la mise sous tension de façon à obtenir des données d'identification de chaque carte, occupant un socle, des moyens (8) pour comparer les données d'identification ainsi obtenues à des données d'identification stockées, lors de la mise hors-tension dans ladite mémoire non volatile pour des cartes occupant des socles correspondants, de manière à déterminer si les données opérationnelles stockées sont valides pour les cartes occupant actuellement les socles, et des moyens de portes (45) répondant à un résultat de comparaison positif pour laisser passer les données opérationnelles valides à stocker dans lesdites cartes de manière à contrôler l'exécution des fonctions optionnelles fournies.

2. Système selon la revendication 1 comprenant une ou plusieurs cartes d'option installée(s) dans lesdits socles, chaque carte comprenant des circuits (20) pour engendrer lesdites données d'identification en réponse audit signal de validation et des registres (21) pour stocker lesdites données opérationnelles valides provenant de ladite mémoire.

3. Système selon la revendication 1 ou 2, comprenant des moyens (60) pour engendrer des données d'identification fixes en réponse aux signaux de validation appliqués à des socles vides.

4. Système selon la revendication 3 comprenant des moyens (8 et figure 6) pour placer initialement des données opérationnelles dans ladite mémoire en réponse à des données d'identification reçues des cartes placées sur lesdits socles et sélectionnées séquentiellement et auxdites données fixes correspondant à des socles vides.

5. Système selon la revendication 4 comprenant des moyens (8 et figure 7) pour transférer des données opérationnelles de ladite mémoire auxdits registres de chaque carte sur un socle en réponse à la détection d'une concordance entre la donnée d'identification de chaque carte sur un socle ainsi que de ladite donnée d'identification fixe correspondant à un socle vide, avec lesdites données d'identification mises en mémoire, ou, en réponse à la détection d'une non-concordance, pour mettre à jour lesdites données opérationnelles dans la mémoire suite à la réception des données d'identification reçues des cartes et suite auxdites données d'identification fixes provenant des socles vides.

6. Procédé de fixation automatique de données opérationnelles destinées au fonctionnement de cartes d'option enfichables dans des socles d'entrée/sortie d'un système micro-ordinateur, chaque carte d'option emmagasinant des données d'identification identifiant l'option fournie, caractérisé par les étapes suivantes :
- à la mise sous tension initiale du système, génération de paramètres de cartes d'options se rapportant aux cartes enfichées dans les socles, et stockage dans une mémoire non-volatile desdits paramètres engendrés ;
- à la mise sous tension suivante, vérification que les paramètres emmagasinés sont toujours valides pour les cartes d'options respectives enfichées dans les socles ;
- transfert des paramètres valides de la mémoire aux cartes à options respectives ; et
- utilisation des paramètres ainsi transférés comme données de commande permettant la mise en route des options fournies par lesdites cartes.

7. Procédé selon la revendication 6, dans lequel lesdits paramètres comprennent des données d'identification, et chaque carte d'option comprend des moyens pour engendrer des données d'identification, et dans lequel l'étape de détermination de la validité des données stockées comprend une comparaison des données d'identification de chaque carte d'option avec les données d'identification contenues dans les paramètres emmagasinés dans une position de mémoire correspondant au socle dans lequel la carte est enfichée.

8. Procédé selon l'une des revendications 6 ou 7 dans lequel les paramètres comprennent un ensemble de paramètres uniques indiquant l'absence d'une carte d'option dans un socle et dans lequel l'étape de détermination du maintien de la validité des paramètres emmagasinés comprend, en outre, l'étape de génération dudit ensemble de paramètres uniques à la détection de l'absence d'une carte d'option dans un socle, et la détermination, par comparaison, de la concordance dudit ensemble de paramètres stockés correspondant à ce socle avec l'ensemble de paramètres uniques, de façon à déterminer ainsi si une carte d'option a été insérée dans le système au cours de l'étape hors tension du système.
